# EUROPÄISCHE PATENTSCHRIFT

(11) **EP 2 060 844 B1**
(45) Veröffentlichungstag und Bekanntmachung des Hinweises auf die Patenterteilung: **28.04.2010**
(21) Anmeldenummer: 07022261.7
(22) Anmeldetag: 15.11.2007
(51) Int. Cl.: F16M 11/06, F16M 13/02, A61G 13/00, F21V 21/26

(54) **Vorrichtung zum Abstützen von medizinischen Geräten**
Device for supporting medical instruments
Dispositif de support d'appareils médicaux

(43) Veröffentlichungstag der Anmeldung: 20.05.2009
(73) Patentinhaber: Ingolf Diez, Medizintechnik, 78532 Tuttlingen (DE)
(72) Erfinder: Diez, Ingolf, 78532 Tuttlingen (DE)
(74) Vertreter: von Hellfeld, Axel

(56) Entgegenhaltungen:
- EP-A- 0 344 658
- DE-U1- 20 015 399
- FR-A- 1 341 061
- US-A- 6 030 103
- US-B1- 6 601 811

## Beschreibung

Die Erfindung betrifft eine Vorrichtung zum Abstützen von medizinischen Geräten, insbesondere zum Abstützen von Operationsleuchten, Monitoren oder Navigationsgeräten für die Chirurgie. Bevorzugt betrifft die Erfindung derartige Vorrichtungen mit einem Vertikalstutzen, der an der Decke eines Operationssaales montierbar ist.

Der Stand der Technik gemäß der EP 0 392 303 A1 kennt eine derartige Vorrichtung zum Abstützen einer Operationsleuchte mit einem an der Decke eines Operationssaales montierbaren Vertikalstutzen, an dem mehrere Ausleger drehbar befestigt sind. Jeder der Ausleger trägt dort eine Operationsleuchte.

Bereits dieser Stand der Technik weist daraufhin, dass sich Aufbau und Größe von Operationsleuchten je nach Einsatzzweck und den räumlichen Gegebenheiten unterscheiden, weshalb zur kurzfristigen Abdeckung des Bedarfs beim Hersteller eine Vielzahl von Abstützvorrichtungen für Operationsleuchten auf Lager gehalten werden müssen. Entsprechend stellt sich dieser Stand der Technik bereits die Aufgabe, eine Operationsleuchte und hierfür eine Abstützung bereitzustellen, die bei relativ reduziertem Lagerbestand eine hohe Variationsmöglichkeit hinsichtlich des Aufbaus der Leuchte ermöglicht. Dieser Stand der Technik erfordert aber, dass bereits beim Hersteller die Entscheidung und die Zusammenstellung der einzelnen Komponenten des aus den Operationsleuchten und deren Abstützvorrichtung bestehenden Systems zu erfolgen hat.

Das Dokument DE 20015399 U zeigt eine Vorrichtung gemäß dem Oberbegriff des Anspruchs 1.

Die vorliegende Erfindung stellt sich die Aufgabe, eine Vorrichtung zum Abstützen von medizinischen Geräten, insbesondere Operationsleuchten, bereitzustellen, die eine erweiterte Variationsmöglichkeit hinsichtlich der Zusammenstellung der Vorrichtung am Ort Ihrer Montage ermöglicht.

Hierzu stellt die Erfindung bereit eine Vorrichtung zum Abstützen von medizinischen Geräten gemäß dem Anspruch 1.

Im Zusammenhang mit dieser Erfindungsbeschreibung sind die Begriffe "vertikal", "horizontal", "oben", und "unten" o. dgl. mit Blick auf den üblicherweise vorgesehenen Einbau der Vorrichtung zu verstehen, also insbesondere an der Decke eines Operationssaales oder dergleichen.

Gemäß der Erfindung werden also als System bereitgestellt die Vorrichtung zum Abstützen von zum Beispiel mehreren Operationsleuchten und eine Reihe von Auslegern unterschiedlicher Länge, die dann am Einsatzort der Vorrichtung entsprechend den dortigen Gegebenheiten ausgewählt und montiert werden. Dieser Auswahl kann sowohl die Länge als auch die Anzahl der eingesetzten Ausleger betreffen. Die Anzahl der Ausleger kann dadurch variiert werden, dass zwei oder mehr Lagerköpfe wahlweise untereinander und aneinander montierbar sind.

Gemäß der Erfindung wird also ein System bereitgestellt mit Lagerköpfen, an denen jeweils Ausleger unterschiedlicher Länge montiert sind, so dass dann vor Ort entsprechend den dortigen Gegebenheiten wahlweise Lagerköpfe mit Auslegern passender Länge zusammengestellt und an der Decke montiert werden können.

Die Erfindung sieht vor, dass jedem Lagerkopf jeweils eine Welle zugeordnet ist, auf welcher der Lagerkopf drehbar ist. Dabei ist jeweils eine Welle mit einer über ihr angeordneten Welle mittels Verbindungsschrauben direkt verbindbar. Je nach Anzahl der vor Ort montierten Wellen bzw. Lagerköpfe, kann dann auch die Anzahl der einzusetzenden Ausleger variiert werden.

Eine bevorzugte Ausgestaltung sieht vor, dass jeweils ein Lagerkopf eine Aufnahme aufweist, in die ein Ausleger ein kurzes Stück hineinschiebbar und dann mit einem Befestigungsmittel, wie einer oder mehreren Schrauben, am Lagerkopf montierbar ist.

Nachfolgend wird ein Ausführungsbeispiel der Erfindung anhand der Zeichnung näher beschrieben. Es zeigt:
Fig. 1 schematisch eine Vorrichtung zum Abstützen von Operationsleuchten mit mehreren Auslegern;
Fig. 2 eine Explosionsdarstellung eines Teils der Vorrichtung gemäß Fig. 1 mit einem Ausleger;
Fig. 3 einen Schnitt durch einen Teil der Vorrichtung mit drei montierten Auslegern; und
Fig. 4 einen Schnitt entlang der Linie A-A von Fig. 3.

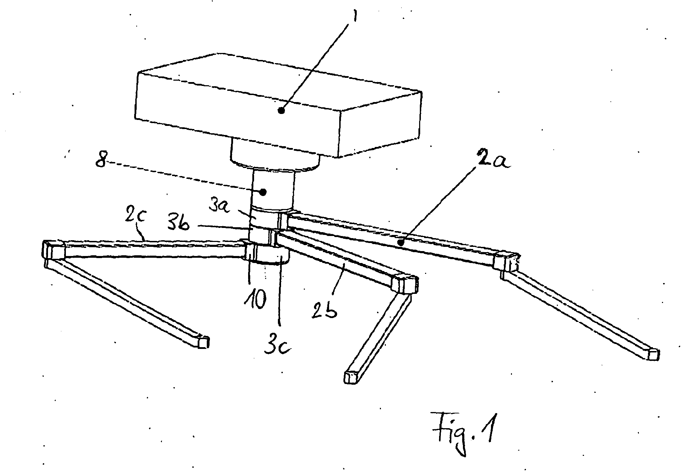

In Fig. 1 ist die Decke eines Operationssaales schematisch als Ausschnitt dargestellt und mit dem Bezugszeichen 1 versehen. Es geht darum, mehrere Ausleger 2a, 2b, 2c so zu montieren, dass die Montage vor Ort möglichst vielfältige Variationsmöglichkeiten bietet. Dargestellt und beschrieben sind nur die Ausleger und deren Montage. Ergänzend zu den Auslegern können Federarme in der als solches bekannten Weise an den Enden der Ausleger befestigt werden (vgl. den oben zitierten Stand der Technik).

Ein Vertikalstutzen (8) verbindet die Ausleger 2a, 2b, 2c mit der Decke 1. Unterhalb des Vertikalstutzens sind die Ausleger 2a, 2b, 2c mittels Lagerköpfen 3a, 3b, 3c montiert.

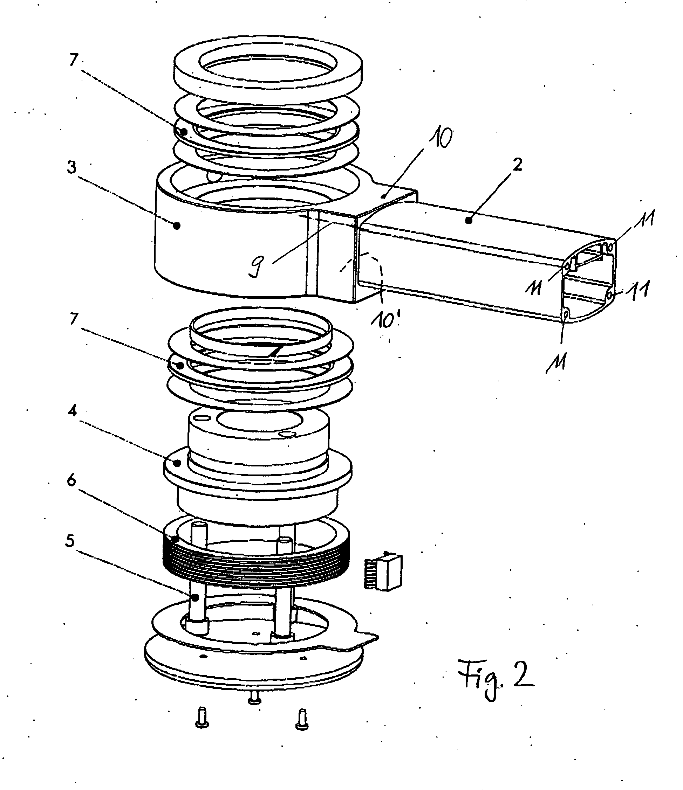

Gemäß Fig. 2 hat jeder Lagerkopf 3 eine Einrichtung 10 zur Aufnahme eines Auslegers 2. Fig. 2 zeigt weiterhin in Explosionsdarstellung eine Welle 4, Verbindungsschrauben 5, Schleifringe 6, Lager 7 (zum Beispiel Nadellager), und weitere Komponenten. Die Schleifringe 6 dienen zur elektrischen Kontaktgabe und Positionsermittlung.

Gemäß Fig. 2 ist ein Ausleger 2 in eine Aufnahme 10' der Montageeinrichtung 10 einige Zentimeter hineingeschoben und wird dann mit einer sich horizontal erstreckenden Schraube, deren Verlauf durch das Bezugszeichen 9 angedeutet ist, am Lagerkopf 3 befestigt. Vier Schrauben verlaufen horizontal und greifen in Kanäle 11 im Ausleger ein. Der Ausleger 2 besteht aus Aluminium und die Schrauben schneiden sich in die Wandung der Kanäle 11 zur Befestigung des Auslegers 2 am Lagerkopf 3.

Auf diese Weise können aus mehreren zur Wahl stehenden Auslegern 2 unterschiedlicher Länge die passenden vor Ort ausgesucht und montiert werden.

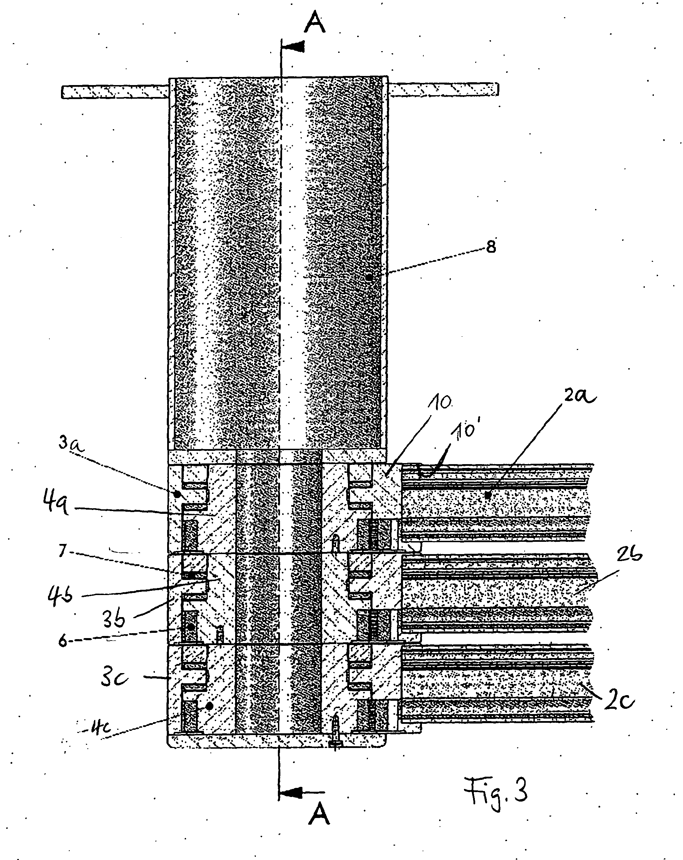

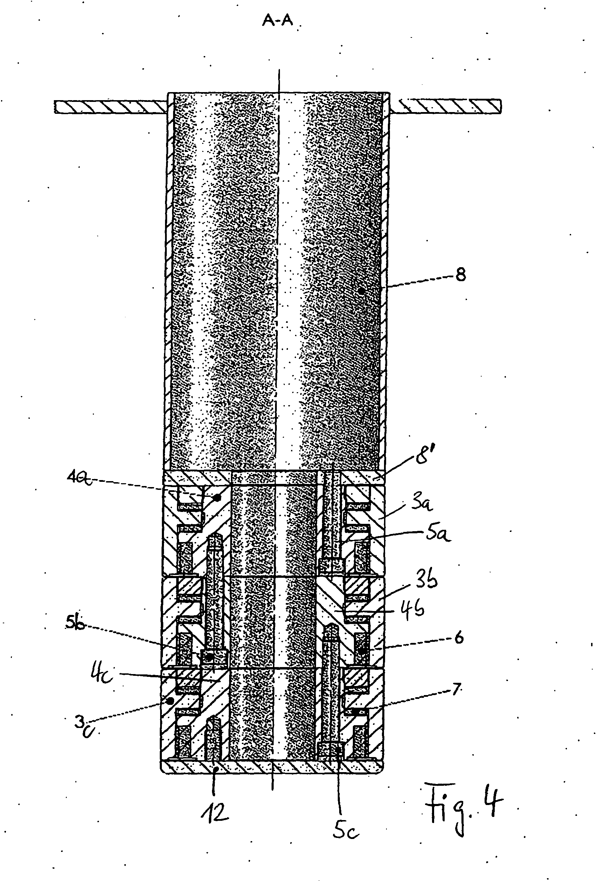

Fig. 3 zeigt einen Vertikalschnitt durch die Anordnung gemäß Fig. 1 und Fig. 4 zeigt einen Schnitt entlang der Linie A-A von Fig. 3.

Gemäß den Fig. 3 und 4 sind beim dargestellten Ausführungsbeispiel drei Wellen 4a, 4b, 4c untereinander einzeln montiert. Jede Welle trägt einen Lagerkopf 3a, 3b, 3c.

Statt der dargestellten drei Wellen und drei Lagerköpfe können auch weniger oder mehr Wellen und Lagerköpfe montiert werden. Darin liegt eine weitere Variationsmöglichkeit der Erfindung. Fig. 3 zeigt, wie die Ausleger 2a, 2b, 2c in Aufnahmen 10' der Montageeinrichtung 10 des jeweiligen Lagerkopfes eingeschoben sind.

Fig. 4 zeigt die Montage der Wellen 4a, 4b, 4c. Zunächst wird die obere Welle 4a mit einer Verbindungsschraube 5a an einem unteren Stirnflansch 8' des Vertikalstutzens 8 befestigt. Danach wird darunter eine weitere Welle 4b mit zugehörigem Lagerkopf 3b mittels der Verbindungsschraube 5b an der darüber liegenden Welle 4a befestigt. Unter der Welle 4b kann dann eine weitere Welle 4c mittels der Verbindungsschraube 5c befestigt werden. Aus dieser Montagetechnik ergibt sich, dass einzelne Wellen und Lagerköpfe wahlweise montierbar sind, also statt der dargestellten drei Wellen mit jeweils einem Lagerkopf auch zwei Wellen mit Lagerkopf oder auch mehr als drei Wellen mit Lagerkopf montierbar sind. Unten wird die Vorrichtung durch eine Deckplatte 12 abgeschlossen.

## Patentansprüche

1. Vorrichtung zum Abstützen von medizinischen Geräten mit
- einem Vertikalstutzen (8),
- mehreren am Vertikalstutzen (8) montierbaren Lagerköpfen (3a, 3b, 3c),
- einem oder mehreren Auslegern (2, 2a, 2b, 2c), die an einem oder mehreren Lagerköpfen abgestützt sind, und
- Mitteln (4, 5), um wahlweise zwei oder mehr Lagerköpfe (3a, 3b, 3c) vertikal untereinander zu montieren,
**dadurch gekennzeichnet, dass** jedem Lagerkopf (3a, 3b, 3c) jeweils eine Welle (4a, 4b, 4c) zugeordnet ist, auf welcher der Lagerkopf drehbar ist, wobei jeweils eine Welle (4b, 4c) mit einer über ihr angeordneten Welle (4a, 4b) mittels Verbindungsschrauben (5a, 5b, 5c) direkt verbindbar ist.

2. Vorrichtung gemäß Anspruch 1, **dadurch gekennzeichnet, dass** der Vertikalstutzen (8) an der Decke eines Operationssaales montierbar ist, und dass das medizinische Gerät eine Operationsleuchte ist.

3. Vorrichtung nach einem der Ansprüche 1 oder 2, **dadurch gekennzeichnet, dass** die Lagerköpfe jeweils eine Einrichtung (10) aufweisen, an der wahlweise Ausleger unterschiedlicher Länge montierbar sind.

4. Vorrichtung nach einem der vorhergehenden Ansprüche, **dadurch gekennzeichnet, dass** die Einrichtung (10), an der wahlweise Ausleger unterschiedlicher Länge montierbar sind, eine Aufnahme (10') aufweist, in die ein Ausleger (2) ein Stück weit einschiebbar ist.

5. Vorrichtung nach einem der vorhergehenden Ansprüche, **dadurch gekennzeichnet, dass** ein Ausleger (2) mit sich horizontal erstreckenden Schrauben (9) an dem Lagerkopf (3) befestigbar ist.

## Claims

1. Apparatus for supporting a medical device, said apparatus comprising
- a vertical pillar (8),
- several bearing heads (3a, 3b, 3c) which are mountable at the vertical pillar (8),
- one or more cantilevers (2, 2a, 2b, 2c), which are supported at one or more bearing heads, and
- means (4, 5) for mounting two or more bearing heads (3a, 3b, 3c) vertically one below the other, **characterized in that** to each bearing head (3a, 3b, 3c) a shaft (4a, 4b, 4c) is coordinated at which the bearing head is rotatable, wherein a shaft (4b, 4c) is connectable directly to a shaft (4a, 4b) arranged above it by means of connecting screws (5a, 5b, 5c).

2. Apparatus according to claim 1, **characterized in that** the vertical pillar (8) is mountable at the ceiling of an operation theatre and that the medical device is an operation theatre lamp.

3. Apparatus according to one of the claims 1 or 2, **characterized in that** the bearing heads each comprise a means (10) at which selectively cantilevers of various lengths can be mounted.

4. Apparatus according to one of the preceding claims, **characterized in that** said means (10) at which selectively cantilevers of different length can be mounted, comprise a collet (10') into which a cantilever (2) can be introduced for a certain distance.

5. Apparatus according to one of the preceding claims, **characterized in that** a cantilever (2) can be mounted at the bearing head (3) by means of screws (9) extending horizontally.

## Revendications

1. Dispositif servant à soutenir des appareils médicaux, comprenant
- un raccord vertical (8),
- plusieurs têtes d'appui (3a, 3b, 3c) pouvant être montées sur le raccord vertical (8),
- un ou plusieurs bras (2, 2a, 2b, 2c) soutenus par une ou plusieurs têtes d'appui et
- des moyens (4, 5) pour monter verticalement l'une sous l'autre, au choix, deux têtes d'appui (3a, 3b, 3c) ou plus,
**caractérisé en ce qu'**un arbre (4a, 4b, 4c), sur lequel la tête d'appui est montée mobile en rotation, est respectivement associé à chaque tête d'appui (3a, 3b, 3c), un arbre (4b, 4c) pouvant respectivement être directement relié au moyen de vis d'assemblage (5a, 5b, 5c) à un arbre (4a, 4b) disposé au-dessus de celui-ci.

2. Dispositif selon la revendication 1, **caractérisé en ce que** le raccord vertical (8) peut être monté au plafond d'une salle d'opération et **en ce que** l'appareil médical consiste en une lampe d'opération.

3. Dispositif selon la revendication 1 ou 2, **caractérisé en ce que** les têtes d'appui présentent respectivement un dispositif (10) auquel peuvent être montés, au choix, des bras de longueur différente.

4. Dispositif selon l'une des revendications précédentes, **caractérisé en ce que** le dispositif (10), auquel peuvent être montés, au choix, des bras de longueur différente, présente un logement (10') dans lequel peut être inséré le bout d'un bras (2).

5. Dispositif selon l'une des revendications précédentes, **caractérisé en ce qu'**un bras (2) peut être fixé à la tête d'appui (3) au moyen de vis (9) s'étendant horizontalement.
